(19) Europäisches Patentamt
European Patent Office
Office européen des brevets

(11) Veröffentlichungsnummer: **0 012 248**
**A2**

(12) # EUROPÄISCHE PATENTANMELDUNG

(21) Anmeldenummer: **79104618.8**

(22) Anmeldetag: **21.11.79**

(51) Int. Cl.³: **C 01 B 33/28**, C 11 D 3/12 // C09C1/42, C04B33/10

(30) Priorität: **06.12.78 DE 2852674**

(43) Veröffentlichungstag der Anmeldung: **25.06.80 Patentblatt 80/13**

(84) Benannte Vertragsstaaten: **BE DE FR GB IT**

(71) Anmelder: **BAYER AG, Zentralbereich Patente, Marken und Lizenzen, D-5090 Leverkusen 1, Bayerwerk (DE)**

(72) Erfinder: **Endres, Robert, Dr., Hahnenweg 1, D-5000 Köln 80 (DE)**
Erfinder: **Drave, Heinz, Dr., Völklinger Strasse 21, D-5090 Leverkusen 1 (DE)**
Erfinder: **Mansmann, Manfred, Dr., Oskar-Schlemmer-Strasse 2, D-5090 Leverkusen 1 (DE)**
Erfinder: **Puppe, Lothar, Dr., Gisbert-Cremer-Strasse 45a, D-5090 Leverkusen 1 (DE)**

(54) **Verfahren zur Herstellung von Zeolith A aus Kaolin sowie dessen Verwendung.**

(57) Die vorliegende Erfindung betrifft ein Verfahren zur Herstellung von Zeolith A aus Kaolin durch Überführen des Kaolins in Metakaolin und anschließende Umsetzung des Metakaolins in wäßrig-alkalischem Medium, wobei das Überführen des Kaolins in Metakaolin bei Temperaturen zwischen 700 und 950°C in Gegenwart von Erdalkaliverbindungen und gegebenenfalls in Gegenwart von ungefärbten Halogeniden und/oder von Halogenen erfolgt sowie die Verwendung derart hergestellter Zeolithe in Wasch- und Reinigungsmitteln.

EP 0 012 248 A2

BAYER AKTIENGESELLSCHAFT
Zentralbereich
Patente, Marken und Lizenzen

5090 Leverkusen, Bayerwerk
Br/Thc

## Verfahren zur Herstellung von Zeolith A aus Kaolin sowie dessen Verwendung

Die vorliegende Erfindung betrifft ein verbessertes Verfahren zur Herstellung von Zeolith A mit erhöhter Helligkeit und vermindertem Gelbstich (unter Helligkeit und Gelbstich sollen im Sinne der vorliegenden Erfindung Farbwerte entsprechend dem Farbmeßsystem der Fa. Hunter, Fairfax, Va., USA verstanden werden; dabei werden die Helligkeit L und der Gelbstich b des Zeolithmaterials an dem Farbmeßgerät D 25 D 2 P der genannten Firma mit der Meßgeometrie $8^{o}/0^{o}$ und der Normlichtart C bestimmt).

Die erfindungsgemäß hergestellten Zeolith-Materialien können in vielfältiger Weise verwendet werden, insbesondere sollen sie in Wasch- und Reinigungsmitteln eingesetzt werden.

Wasch- und Reinigungsmittel, in denen Zeolith A als Gerüstsubstanz einen mehr oder minder großen Anteil von

Natriumtriphosphat ersetzen kann, sind z.B. beschrieben in der DE-OS 2 412 837. Die Herstellung von Zeolith A ist lange bekannt, ebenso wie die ionenaustauschende Eigenschaft (vgl. z.B. DE-AS 1 038 017). Ein wirtschaftlich vorteilhaftes Herstellungsverfahren für Zeolith A geht von natürlich vorkommenden Alumosilicaten, insbesondere von Kaolin aus (vgl. z.B. DE-OS 1 467 051). Reine Handelsprodukte von Kaolin bestehen zu über 90 % aus dem Tonmineral Kaolinit der ungefähren Formel $Al_2O_3 \cdot 2\ SiO_2 \cdot 2\ H_2O$. Die Kaolinsorten werden beispielsweise für den Einsatz in der Papierindustrie nach ihrer Helligkeit gehandelt. Für den vorgesehenen Einsatz zur Herstellung von Zeolith für Waschmittel kommen nur helle Sorten in Frage, deren Helligkeit L oberhalb etwa 88 liegt. Diese hellen Kaolinqualitäten weisen jedoch Eisengehalte zwischen etwa 1000 und 5000 ppm auf. Bei der Synthese des Zeolith A entstehen daraus Produkte, die eine gegenüber Zeolith A, hergestellt aus Alkalisilicat- und Alkalialuminat-Lösung, verminderte Helligkeit und einen höheren Gelbstich aufweisen. In der DE-OS 2 601 217 wird ein solches Material als Gerüstsubstanz in Waschmitteln vorgeschlagen. Wenn auch diese Produkte keine Nachteile bei der Verwendung als Phosphatersatzstoffe in Wasch- und Reinigungsmitteln bringen, so erhält das Waschmittel durch den Zeolith ein Aussehen, durch das sich das Waschmittel für den Anwender als mindere Qualität darstellen könnte.

Es bestand daher die Aufgabe, aus dem preiswert und in praktisch unbegrenzter Menge vorhandenen Kaolin einen helleren und weniger gelbstichigen Zeolith A herzustellen unter gleichzeitiger Beibehaltung der bekannten günstigen Eigenschaften, wie Calciumbindevermögen, Calciumaustauschkinetik und Teilchengrößenverteilung.

Gegenstand der vorliegenden Erfindung ist daher ein Verfahren zur Herstellung von Zeolith A aus Kaolin durch Überführung des Kaolins in Metakaolin und anschließende Umsetzung des Metakaolins in wäßrig-alkalischem Medium, welches dadurch gekennzeichnet ist, daß das Überführen des Kaolins in Metakaolin bei Temperaturen zwischen 700 und 950°C in Gegenwart von Erdalkaliverbindungen und gegebenenfalls in Gegenwart von ungefärbten Halogeniden und/oder von Halogenen erfolgt.

Eine bevorzugte Ausführungsform des erfindungsgemäßen Verfahrens besteht darin, die Überführung des Kaolins in Metakaolin unter reduzierenden Bedingungen und gegebenenfalls in Gegenwart von Alkaliverbindungen durchzuführen.

Überraschenderweise wird nicht aus jedem aufgehellten Metakaolin auch ein aufgehellter Zeolith A synthetisiert. So gelingt es zwar, z.B. mit Zusatz von NaCl und Torfkoks einen stark aufgehellten Metakaolin nach der Calcinierung herzustellen. Jedoch wird der daraus synthetisierte Zeolith A gelbstichig und in der Helligkeit gemindert. Nur durch zusätzliche Zugabe von Erdalkaliverbindungn zum Rohstoffgemisch vor der Glühung ist es möglich, die im Metakaolin erzielte Aufhellung und Verminderung des Gelstichs auch noch über die Synthese bis zum Zeolith A aufrecht zu halten.

Durch die erfindungsgemäßen Maßnahmen, die überdies wirtschaftlich durchführbar sind, kann die Helligkeit so weit erhöht und der Gelbstich so weit abgesenkt werden, daß die Farbwerte eines Wasserglas-Aluminat-Zeoliths erreicht werden. Das Calciumbindevermögen des Zeoliths wird durch die Zusätze nicht gemindert.

Für die Metakaolinbildung wird nach dem Stand der Technik der Kaolin 2-4 Stunden auf 500 bis 800°C erhitzt. Es ist bekannt, daß bei weiterem Erhitzen auf höhere Temperaturen eine Spinellphase und Mullit neben Cristobalit gebildet werden. Wenn diese Kristallformen gebildet sind, ist die Umsetzung des calcinierten Kaolins mit der wäßrig-alkalischen Lösung so gestört, daß man nur Produkte erhält, die ein ungenügendes Calciumbindevermögen aufweisen (Calciumbindevermögen bestimmt nach einer für Waschmittelhersteller zweckmäßigen Vorschrift, wie sie z.B. in der DE-OS 2 416 837 beschrieben ist). Für eine möglichst günstige Wirkung der erfindungsgemäßen Maßnahmen hat es sich als zweckmäßig erwiesen, die Temperatur der Metakaolinbildung so hoch zu wählen wie eben vertretbar. Erhitzt man den Kaolin 5 Min. bis 2 Stunden auf Temperaturen zwischen 700 und 950°C, wobei naturgemäß für die niedrigeren Temperaturen die längeren Zeiten und für die höheren Temperaturen die kürzeren Zeiten angewandt werden, so wird nach der anschließenden Umsetzung des Metakaolins zum Zeolith A keine nachteilige Wirkung auf das Calciumbindevermögen festgestellt. Besonders zweckmäßig hat sich bei Kaolinen verschiedener Provenienz eine Erhitzung von 5 bis 80 Min. auf 820 bis 900°C erwiesen. Im konkreten Einzelfall lassen sich die Calcinierungsbedingungen für den Kaolin durch wenige Versuche an Hand des resultierenden Calciumbindevermögens des Zeoliths leicht ermitteln.

Als Erdalkaliverbindungen verwendet man für das erfindungsgemäße Verfahren Magnesium-, Calcium-, Strontium- und/oder Bariumverbindungen wie z.B. Sulfate, Carbonate, Hydroxide, Nitrate, Nitrite, Halogenide oder auch direkt die Oxide. Bevorzugt wird als Erdalkaliverbindung feinteiliges Magnesiumoxid, Magnesiumcarbonat und/oder Magnesiumhydroxidcarbonat eingesetzt.

Als ungefärbte Halogenide werden Fluoride, Chloride und/oder Bromide, die Halogenwasserstoffe, oder die Halogene selbst, eingesetzt. Als Kationen kommen die Elemente aller Haupt- und Nebengruppen des chemischen Periodensystems, die unter den genannten Bedingungen keine Verfärbungen hervorrufen, in Frage. Als vorteilhaft haben sich beispielsweise erwiesen, ohne damit eine zusätzliche Einschränkung hinsichtlich der Einsetzbarkeit vorzugeben:

Chlorwasserstoff, Alkali-, Erdalkali- und Erdmetallhalogenide, Halogenide von Bor, Kohlenstoff, Silicium, Phosphor, Schwefel, Zink-, Titan- und Zirkonhalogenide. Besonders bevorzugt wird Kochsalz.

Als Reduktionsmittel verwendet man Kohlenstoffe wie z.B. Holzkohle, Petrol-, Torfkoks oder Ruß, also Rohstoffe, die nahezu aschefrei verbrennen und die Farbe des Metakaolins nicht durch Ascherückstände verschlechtern. Außerdem kommen auch Alkalisulfit, -pyrosulfit, -hydrogensulfit oder -dithionit in Frage. Aus wirtschaftlichen und technischen Gründen wird bevorzugt Torfkoks eingesetzt.

Anstatt in Gegenwart von Kohlenstoff kann man die Calcinierung auch im Gasstrom, der CO enthält, durchführen, z.B. in reinem CO oder CO mit Stickstoff als Trägergas. Darüber hinaus kommen auch Generatorgas, Wassergas, Kohlenwasserstoffe und Brennstoffe in Frage, die keine Verunreinigungen im Kaolin hinterlassen.

Unter dem Begriff Alkaliverbindungen sollen im Rahmen der vorliegenden Erfindung z.B. Sulfate, Carbonate, Formiate, Acetate, Oxalate, Hydroxide, Nitrate, Nitrite der Alkalimetalle, insbesondere Lithium, Natrium und/oder Kalium, verstanden werden, nicht dagegen die Alkalihalogenide, die unter den Begriff "ungefärbte Halogenide" fallen. Unter den Alkaliverbindungen wird Soda bevorzugt.

Die Zusatzmenge der Erdalkali-, der Alkali- und der ungefärbten Halogenverbindungen liegt zwischen 0,1 und 10 Gew.-%, berechnet als Erdalkali- und Alkalioxid bzw. als Halogen und bezogen auf Kaolin, bevorzugt zwischen 0,2 und 2 %. Die Zusatzmengen des Reduktionsmittels liegen zwischen 0,1 und 10 Gew.-%, bezogen auf Kaolin, bevorzugt jedoch zwischen 0,5 und 5 Gew.-%.

Diese Verbindungen können in fester Form dem Kaolin trocken untergemischt werden, wobei es zweckmäßig ist, möglichst feinteilige Pulver zu verwenden. Die Vermischung kann auch naß erfolgen, wobei die Verbindungen der Kaolinsuspension in löslicher oder unlöslicher Form zugesetzt werden.

Die Erhitzung des Kaolins zum Metakaolin erfolgt in bekannter Weise in Muffel-, Kammer-, Teller-, Drehrohröfen oder in anderen geeigneten Geräten. Besonders vorteilhaft kann die Calcinierung des Kaolingemenges in einem Stoßerhitzungsaggregat erfolgen, wie es z.B. in der GB-PS 869 966 und US-PS 3 021 195 beschrieben ist. Hierbei wird der Kaolin in Metakaolin durch Stoßerhitzen bei Temperaturen zwischen 600 und 1.000°C bei einer Verweilzeit von 0,01 bis 5 Sekunden überführt. Allerdings wird hierbei nicht die notwendige Mindestverweilzeit von 5 Minuten erreicht, so daß die Stoßerhitzung nach dem Stand der Technik zwar feinteiligen Metakaolin mit sehr geringem Restwassergehalt liefert ohne jedoch die erforderliche Aufhellung und Verbesserung der Farbe.

Um die gewünschte Aufhellung und Verminderung des Gelbstiches zu erzielen, ist ein anschließender Temperschritt erforderlich. Diese bevorzugte Ausführungsform des erfindungsgemäßen Verfahrens ist dadurch gekennzeichnet, daß das Überführen des Kaolins in Metakaolin durch Stoßerhitzung bei Temperaturen zwischen 600 und 1.000°C bei einer Verweilzeit von 0,01 bis 5 Sekunden und anschließende Temperung bei Temperaturen zwischen 700 und 950°C erfolgt.

Einem Aggregat zur Stoßerhitzung wird ein Temperaggregat nachgeschaltet, in das der stoßerhitzte Kaolin abgeschieden und auf der erforderlichen Temperatur zwischen 700 und 950°C zwischen 5 Minuten bis 2 Stunden gehalten wird. Vorzugsweise werden als Reduktionsmittel CO-haltige Gase verwendet; dabei empfiehlt es sich in diesem Fall, diese direkt in das Temperaggregat einzuleiten. Im Fall des Zusatzes von Kohlenstoff wird nach der Calcinierung der unverbrannte Kohlenstoff durch Zufuhr von Luftsauerstoff verbrannt, wobei die Temperatur bei diesem Schritt ebenfalls im Bereich zwischen 950 und 700°C liegen kann, aber auch tiefer bis herab zu etwa 500°C. Gasförmige Halogenide oder Halogene, vorzugsweise Chlorwasserstoff, werden ebenso direkt in das Temperaggregat eingeleitet.

Das stoßerhitzte Kaolingemenge unterscheidet sich von Produkten der anderen genannten Calcinieraggregate dadurch, daß es feinteiligere Produkte mit einer größeren spezifischen Oberfläche ergibt. Dadurch ist dieses Material im nachfolgenden Temperungsschritt reaktiver und erfordert niedrigere Temperaturen oder kürzere Reaktionszeiten bis zur gewünschten Aufhellung (vorzugsweise 760 - 840°C, 5 - 60 Minuten).

Die heißen Abgase aus dem Stoßerhitzungsaggregat werden energetisch verwertet, wie z.B. zur Mahltrocknung des

feuchten, stückigen Ausgangsmaterials, zur Vorheizung der Brennerluft für die Stoßerhitzung und zur Beheizung des Temperaggregates.

Der aus dem Ofen ausgeschleuste Metakaolin kann, sofern er aus feinpulvrigem, bereits gemahlenem Kaolin hergestellt wurde, direkt in die wäßrige Alkalilösung gegeben werden. Sofern man von stückigem Kaolin ausgeht, muß der erhaltene Metakaolin vor der Umsetzung mit der wäßrigen Alkalihydroxidlösung einer Feinmahlung unterworfen werden.

Zweckmäßig setzt man den Metakaolin mit verdünnter Natronlauge in bekannter Weise um, indem man z.B. folgende Molverhältnisse einhält:

| | |
|---|---|
| $Na_2O/SiO_2$ | von 0,05 - 10 |
| $H_2O/Na_2O$ | von 15 - 70 |

Das $SiO_2/Al_2O_3$-Verhältnis wird durch die verschiedenen Kaoline vorgegeben und beträgt angenähert 2,0.

Vorzugsweise erhitzt man den Metakaolin zwischen 0,5 und 24 Stunden, bevorzugt zwischen 1 und 8 Stunden, zwischen 70 und 95°C in 7 bis 30 %iger Natronlauge, wobei die NaOH-Menge bevorzugt der 1,3 bis 3-fach stöchiometrisch für die Bildung des Zeoliths A erforderlichen Menge entspricht.

Im folgenden ist eine Reihe von Beispielen angegeben, die die vorliegende Erfindung noch weiter erläutern soll.

Das Vergleichsbeispiel 1 beinhaltet einen Zeolith A. der nach dem Stand der Technik hergestellt wurde. An Hand des Vergleichsbeispieles wird die Farbverbesserung der Folgebeispiele verdeutlicht.

Vergleichsbeispiel 1

Als Kaolin wurde ein gebleichter und gemahlener Feinpapierkaolin mit folgenden Eigenschaften ausgewählt:

Mineralogische Zusammensetzung:

| | |
|---|---|
| Kaolinit | 94,5 % |
| Kali-Feldspat | 3,7 % |
| Natron-Feldspat | 0,6 % |
| Quarz | 0,7 % |
| Restminerale | 0,5 % |

Chemische Analyse

| | |
|---|---|
| $SiO_2$ | 46,9 % |
| $Al_2O_3$ | 38,1 % |
| $Fe_2O_3$ | 0,26 % |
| $TiO_2$ | 0,30 % |
| $K_2O$ | 0,63 % |
| $Na_2O$ | 0,07 % |
| CaO | 0,03 % |
| MgO | 0,04 % |
| $P_2O_5$ | 0,36 % |
| $MnO_2$ | 0,01 % |
| Glühverlust | 13,15 % |

Kornaufbau nach Andreasen

| | |
|---|---|
| 20 - 40 $\mu$ | 0,1 % |
| 10 - 20 $\mu$ | 4,5 % |
| 6 - 10 $\mu$ | 11,1 % |

| | |
|---|---|
| 4 - 6 /u | 14,3 % |
| 2 - 4 /u | 24,3 % |
| 0 - 2 /u | 45,7 % |

Farbeigenschaften

Helligkeit L: 93,5
Gelbstich b: 5,0

300 g dieses Kaolins wurden im Muffelofen bei 700°C 3 Stunden geglüht. 100 g des so erhaltenen Metakaolins wurden mit 433 $cm^3$ 14 %iger Natronlauge 3 Stunden bei 85°C gerührt. Danach wurde der Kristallbrei abfiltriert, mit Wasser bis pH = 10 gewaschen und getrocknet. Es handelte sich nach der Röntgenanalyse um gut kristallinen Zeolith A.

Calciumaustauschvermögen: 150 mg CaO/g wasserfreier Zeolith A

Helligkeit L: 92,3
Gelbstich b: 8,7

Beispiel 2

Feinpapierkaolin wurde mit 1,35 % Magnesiumoxid (leicht, chem. rein) im Pflugscharmischer vermischt und, wie im Beispiel 1 beschrieben, calciniert und zu Zeolith A umgesetzt. Die Röntgenanalyse zeigte gut kristallinen Zeolith A.

Calciumaustauschvermögen: 154 mg CaO/g wasserfreier Zeolith A

Helligkeit L: 94,1
Gelbstich b: 7,1

Beispiel 3

Die Glühung wurde wie im Beispiel 2 mit 1,35 % Magnesiumoxid, jedoch 1 Stunde bei 880°C durchgeführt und der Metakaolin zu Zeolith A umgesetzt. Die Röntgenanalyse zeigte gut kristallinen Zeolith A.

Calciumaustauschvermögen: 157 mg CaO/g wasserfreier Zeolith A
Helligkeit L : 95,7
Gelbstich b : 4,8

Beispiel 4

Feinpapierkaolin wurde mit 6,6 % Bariumcarbonat (chem. rein) im Pflugscharmischer vermischt und 300 g Mischung 1 Stunde bei 880°C geglüht. Der erhaltene Metakaolin wurde zu Zeolith A umgesetzt.

Die Röntgenanalyse zeigte gut kristallinen Zeolith A.

Calciumaustauschvermögen: 144 mg CaO/g wasserfreier Zeolith A
Helligkeit L : 96,1
Gelbstich b : 4,5

Beispiel 5

Feinpapierkaolin wurde mit 1,35 % Magnesiumoxid und 1 % Soda im Pflugsscharmischer vermischt; davon wurden 300 g in einem Drehrohrofen eingetragen. Die Glühung erfolgte bei einer Maximaltemperatur von 880°C und einer durchschnittlichen Produktverweilzeit von 1 Stunde bei dieser Temperatur. Während der Glühung wurden 10 l/h CO eingeleitet. Der erhaltene Metakaolin wurde zu Zeolith A umgesetzt. Die Röntgenanalyse zeigte gut kristallinen Zeolith A.

| | |
|---|---|
| Calciumaustauschvermögen: | 155 mg CaO/g wasserfreier Zeolith A |
| Helligkeit L | : 96,3 |
| Gelbstich b | : 2,7 |

Beispiel 6 - 19 (Tab. 1)

Es wurden jeweils 300 g Kaolin mit 1,35 % Magnesiumoxid (leicht, chem. rein) und den in Tabelle 1 angegebenen Zusätzen von Alkali- und Aluminiumhalogeniden (chem.rein) sowie im Beispiel 13 Torfkoks ( $<$ 0,43 mm) im Pflugscharmischer vermischt und 1 Stunde bei 880°C geglüht. Der so erhaltene Metakaolin wurde wie im Vergleichsbeispiel 1 zu Zeolith A umgesetzt.

In den Beispielen 6 - 19 handelt es sich nach der Röntgenanalyse jeweils um gut kristallinen Zeolith A.

Tabelle 1: Helligkeit L und Gelbstich b von Zeolith A (Zusatz von jeweils 1,35 % MgO u.a. Zusätzen zur Glühung)

| Beispiel | 1,35 % MgO+Zusätze: % Alkalihalogenide | % $AlCl_3$ | Reduktionsmittel % | Ca-Austausch (mg CaO/g AS) | L | b |
|---|---|---|---|---|---|---|
| 6 | o,9 % LiF | - | - | 134 | 96,8 | 3,o |
| 7 | 1,45 % LiCl | - | - | 14o | 95,5 | 2,4 |
| 8 | 3,o % LiBr | - | - | 153 | 96,3 | 4,3 |
| 9 | 1,4 % NaF | - | - | 145 | 95,2 | 2,6 |
| 1o | 2,o % NaCl | - | - | 153 | 96,6 | 2,8 |
| 11 | 3,5 % NaBr | - | - | 145 | 94,7 | 2,5 |
| 12 | 2,o % KF | - | - | 143 | 96,3 | 4,o |
| 13 | 2,55 % KCl | - | - | 143 | 95,4 | 2,3 |
| 14 | 4,1 % KBr | - | - | 153 | 96,7 | 4,o |
| 15 | 2,o % NaCl | 2,o% $AlCl_3$ | - | 143 | 97,1 | 2,6 |
| 16 | 2,o % NaCl | - | 2,o% Torfkoks | 145 | 97,3 | 2,o |
| 17 | 1,8 % $NH_4Cl$ | - | 1,o% Torfkoks | 151 | 96,9 | 3,3 |
| 18 | 2,o % NaCl | 3,6% $AlCl_3 \cdot 6\ H_2O$ | 2,o% Torfkoks | 147 | 97,5 | 2,7 |
| 19 | 2,o % NaCl | - | 1,o% $Na_2SO_3$ | 143 | 97,5 | 3,2 |

Beispiel 20

In 1,1 l Wasser wurden 15 g NaCl und 50 g $MgCl_2 \cdot 6\ H_2O$ (jeweils chem. rein) gelöst und 1 kg Feinpapierkaolin sowie 20 g Torfkoks ($<$ 0,43 mm) zugegeben. Die Suspension wurde 15 Minuten im Kolloidmischer gemischt und anschließend bei ca. 100°C getrocknet. Der Trockenrückstand wurde in einer Bechermühle kurz aufgemahlen und 300 g davon 1 Stunde bei 880°C calciniert. Der so erhaltene Metakaolin wurde wie im Vergleichsbeispiel 1 zu Zeolith A umgesetzt.

Es handelt sich nach der Röntgenanalyse um gut kristallinen Zeolith A.

| | |
|---|---|
| Calciumaustauschvermögen: | 145 mg CaO/g wasserfreier Zeolith A |
| Helligkeit L | : 97,1 |
| Gelbstich b | : 3,0 |

Beispiel 21

Es wurde 100 g Feinpapierkaolin mit 1 % Magnesiumoxid (leicht, chem. rein) im Pflugscharmischer gemischt. Die Mischung wurde in einen indirekt beheizten Drehrohrofen mit einem Quarzrohr von 60 mm innerem Durchmesser und 600 mm beheizter Länge eingetragen. In das Drehrohr wurde während der Calcinierung (35 Minuten, 750 - 880°C) ein Kohlenmonoxidstrom (10 l/h) eingeleitet. Der er-

haltene Metakaolin wurde wie im Vergleichsbeispiel 1 zu Zeolith A umgesetzt. Es handelte sich nach der Röntgenanalyse um gut kristallinen Zeolith A.

| | |
|---|---|
| Calciumaustauschvermögen: | 151 mg CaO/g wasserfreier Zeolith A |
| Helligkeit L | : 95,8 |
| Gelbstich b | : 3,0 |

<u>Beispiele 22 - 25</u> (Tabelle 2)

Für die folgenden Beispiele wurde ein im Pflugscharmischer hergestelltes Gemenge von 1,35 % Magnesiumoxid (leicht, chem. rein) kontinuierlich in eine Stoßerhitzungs- und Temperapparatur über ein Silo und ein Injektionsteil eingetragen.

Im Stoßerhitzungsteil wurde das Produkt entwässert, indem mittels einer Vorverbrennungskammer heiße Verbrennungsgase von der Temperatur $T_E$ eingeleitet wurden und das von oben eingedüste Produkt mittels eines Zusatzgases auf die gewünschte Ausgangstemperatur $T_A$ gebracht wurde. Die Abscheidung in ein Temperrohr erfolgte durch einen Zyclon. Die Verweilzeit des Produktes darin konnte durch den Takt einer Schleuse eingestellt werden. Die Temperatur $T_P$ im Produkt lag nahe bei $T_A$, was durch eine elektrische Zusatzheizung und eine gute Isolierung des Temperrohres und des Zyclons erreicht wurde. Knapp über der Schleuse konnte durch das Produkt hindurch Kohlenmonoxid und gegebenenfalls Chlorwasserstoff eingeleitet werden. Der aufgehellte M-Kaolin wurde über eine Schleuse ausgetragen.

2 to des so aufgehellten Metakaolins wurden in einen 20 $m^3$ Reaktionsbehälter mit Rührwerk, in dem 8,66 $m^3$ 14 %-iger Natronlauge vorgelegt waren, heiß eingetragen und 3 Stunden bei 85°C gerührt. Der erhaltene Kristallbrei wurde eingedickt, nachgewaschen bis pH = 10, aufgearbeitet und getrocknet.

In den Beispielen 22 - 25 handelte es sich um gut kristallinen Zeolith A.

Tabelle 2: Eigenschaften von Zeolith A, hergestellt aus stoßerhitztem Kaolin

Herstellungsbedingungen M-Kaolin:
Zusatz: 1,35 Gew.-% MgO,
Durchsatz Stoßerhitzung: 20 kg/h
Verweilzeit während der Stoßerhitzung: ca. 0,1 sec.
Verhältnis Erdgas: Brennerluft = ca. 1:14
$T_E$: 1.000 - 1.100°C    $T_A$: 800°C

| Beispiel | Verweilzeit während der Temperung (min) | Gaszusatz ($Nm^3/h$) CO | Gaszusatz ($Nm^3/h$) HCL | $T_p$ (°C) | Ca-Austausch (mg CaO/g wasserfreier (Zeolith A) | Helligkeit L | Gelbstich b | spez. Oberfläche nach BET ($m^2/g$) |
|---|---|---|---|---|---|---|---|---|
| 22* | - | - | - | - | 157 | 94,1 | 6,7 | 13,8 |
| 23** | 30 | - | - | 800 | 153 | 95,1 | 5,4 | 13,4 |
| 24** | 30 | 0,4 | - | 800 | 151 | 95,8 | 2,5 | 13,7 |
| 25** | 20 | 0,4 | 0,25 | 800 | 150 | 96,9 | 2,0 | 13,0 |
| | zum Vergleich ohne Stoßerhitzung: | | | | | | | |
| 16 | | | | | 145 | 97,3 | 2,0 | 7,6 |

* Vergleichsbeispiel 22: ohne Temperung, ohne Gaszusatz

** erfindungsgemäß

Patentansprüche

1. Verfahren zur Herstellung von Zeolith A aus Kaolin durch Überführen des Kaolins in Metakaolin und anschließende Umsetzung des Metakaolins in wäßrig-alkalischem Medium, dadurch gekennzeichnet, daß das Überführen des Kaolins in Metakaolin bei Temperaturen zwischen 700 und 950°C in Gegenwart von Erdalkaliverbindungen und gegebenenfalls in Gegenwart von ungefärbten Halogeniden und/oder von Halogenen erfolgt.

2. Verfahren nach Anspruch 1, dadurch gekennzeichnet, daß es unter reduzierenden Bedingungen durchgeführt wird.

3. Verfahren nach Anspruch 1 oder 2, dadurch gekennzeichnet, daß in Gegenwart von Alkaliverbindungen gearbeitet wird.

4. Verfahren nach einem der Ansprüche 1 bis 3, dadurch gekennzeichnet, daß als Erdalkaliverbindungen Magnesiumoxid, -carbonat und/oder -hydroxicarbonat eingesetzt wird.

5. Verfahren nach einem der Ansprüche 3 bis 4, dadurch gekennzeichnet, daß als Alkaliverbindungen Soda eingesetzt wird.

6. Verfahren nach einem der Ansprüche 1 bis 5, dadurch gekennzeichnet, daß als ungefärbtes Halogenid Kochsalz oder Chlorwasserstoff verwendet wird.

7. Verfahren nach einem der Ansprüche 2 bis 6, dadurch gekennzeichnet, daß als Reduktionsmittel Kohlenstoff oder CO-haltige Gase verwendet werden.

8. Verfahren nach einem der Ansprüche 1 bis 2, 4 und 6 bis 7, dadurch gekennzeichnet, daß das Überführen des Kaolins in Metakaolin durch Stoßerhitzung bei Temperaturen zwischen 600 und 1000°C bei einer Verweilzeit von 0,01 bis 5 Sekunden und anschließende Temperung bei Temperaturen zwischen 700 und 950°C erfolgt.

9. Verwendung des nach einem der Ansprüche 1 bis 8 hergestellten Zeolith A in Wasch- und Reinigungsmitteln.